# EUROPÄISCHE PATENTSCHRIFT

(11) **EP 2 982 930 B1**
(45) Veröffentlichungstag und Bekanntmachung des Hinweises auf die Patenterteilung: **27.12.2017**
(21) Anmeldenummer: 15180139.6
(22) Anmeldetag: 07.08.2015
(51) Int. Cl.: G01B 11/30, G01B 11/24

(54) **EINRICHTUNG ZUM BERÜHRUNGSLOSEN MESSEN AN GETRIEBEWELLEN, INSBESONDERE AN SCHNECKENWELLEN UND ARBEITSVERFAHREN HIERZU**
DEVICE FOR CONTACTLESS MEASUREMENT ON GEAR SHAFTS, IN PARTICULAR ON WORM SHAFTS AND WORKING METHOD FOR THE SAME
DISPOSITIF DE MESURE SANS CONTACT SUR DES ARBRES D'ENTRAINEMENT, EN PARTICULIER SUR DES ARBRES DE VIS SANS FIN ET SON PROCEDE DE TRAVAIL

(30) Priorität: 08.08.2014 DE 102014111320
(43) Veröffentlichungstag der Anmeldung: 10.02.2016
(73) Patentinhaber: Brodmann Technologies GmbH, 76476 Bischweier (DE)
(72) Erfinder: Brodmann, Rainer, 76476 Bischweier (DE); Brodmann, Boris, 76131 Karlsruhe (DE)
(74) Vertreter: Schaumburg und Partner Patentanwälte mbB

(56) Entgegenhaltungen:
- EP-A2- 0 081 376
- EP-A2- 0 478 898
- GB-A- 2 218 513
- US-A- 4 576 482
- US-A1- 2010 288 089
- US-A1- 2013 300 861

## Beschreibung

Die Erfindung betrifft eine Einrichtung zum berührungslosen Messen von Gestaltabweichungen an Flanken von Getriebewellen, vorzugsweise an Flanken von Schneckenwellen oder Zahnrädern. Weiterhin betrifft die Erfindung ein Arbeitsverfahren zum berührungslosen Messen von Gestaltabweichungen.

An die Funktionsflächen der Flanken von Getriebewellen, insbesondere an Flanken von Schnecken oder Zahnrädern, werden hohe Anforderungen gestellt. Die Kontaktflächen zwischen diesen Flanken und den ihnen gegenüberstehenden Zahnradflächen gleiten permanent aufeinander, was zu Verschleiß und Geräuschen führt. Um eine optimale Funktion bei langer Lebensdauer der Getriebewellen und der Zahnräder zu erreichen, muss sowohl die Oberflächenmikrostruktur, nämlich Rauheit und Oberflächendefekte, als auch die Makrogestalt, nämlich Rundheit und Welligkeit, in engen Toleranzen gefertigt werden.

Für die messtechnische Prüfung der Funktionsflächen an Getriebewellen werden standardmäßig taktil arbeitende Rauheitsmessgeräte und Koordinatenmessmaschinen eingesetzt. Die taktile Rauheitsmessung, beispielsweise mit Hilfe von Tastschnittgeräten, erlaubt nur eine Messung quer zur Bearbeitungsrichtung an wenigen Stellen und erlaubt keine Aussagen über die Mikrostruktur entlang einer Flankenbahn in Bearbeitungsrichtung. In dieser Richtung treten jedoch oft für die Funktion der Flanken schädliche Makroformabweichungen auf, wie Welligkeit und Unrundheit, die mit Koordinatenmessmaschinen oder Konturmessgeräten nur unzureichend und mit großem Zeit- und Kostenaufwand zu messen sind. Es besteht daher die Forderung zur messtechnischen Überprüfung dieser Flanken, bei der mit einem möglichst hohen Automatisierungsgrad die gesamte Flankenbahn einer Getriebewelle auf Querrauheit, Längsrauheit, Form und Welligkeit im Sekundenbereich geprüft wird.

Aus der DE 33 37 468 C2 ist ein optischer Sensor bekannt, der zur Ermittlung von Kenngrößen für die Oberflächenstruktur das Streulicht auswertet, das von einer Probe reflektiert wird. Eine Lichtquelle beleuchtet eine zu untersuchende Oberfläche und das reflektierte Licht wird einer Reihe von zeilenförmig angeordneten Detektoren zugeführt. Die Ausgangssignale der Detektoren werden nach statistischen Methoden ausgewertet und dabei Kennwerte ermittelt, die die untersuchte Oberfläche charakterisieren. Durch Drehung der Messebene kann die Richtungsabhängigkeit des Reflexionsverhaltens von Oberflächen mit gerichteter, anisotroper Rauheitsstruktur festgestellt werden.

Die EP 0 210 263 B1 beschreibt eine Vorrichtung zur Ermittlung von Gestaltsfehlern niedriger Ordnung, wie z.B. Unebenheiten, Wellen, Rillen, Rattermarken. Es wird ein ähnlicher optischer Sensor wie bei dem vorgenannten Dokument verwendet. Es können Rundheitsabweichungen im Sub-Mikrometerbereich bei einer kontinuierlichen Abtastung ermittelt werden.

Aus der EP 2 657 686 A1 derselben Anmelderin ist ein optischer Sensor zum Ermitteln von Kenngrößen an Oberflächen bekannt, bei der ein Tubus einen Bild-Rotator enthält. Bei Drehung des Bild-Rotators kann der zeilenförmige Detektor, der eine Vielzahl von Einzeldetektoren umfasst, die vollständige räumliche Streulichtverteilung des von der Oberfläche der Probe reflektierten Lichtes erfassen.

US 2010/288089 A1 beschreibt ein Fertigungssystem für zylindrische Werkstücke, bei dem mit Hilfe eines optischen Sensors die Oberfläche des Werkstücks vermessen wird. Der optische Sensor enthält ein Sendemodul mit einer Strahlungsquelle, Detektoren und Spiegelelemente.

US 4,576,482 A beschreibt ein Verfahren und eine Einrichtung zur Werkstückinspektion, wobei die Oberfläche des jeweiligen Werkstücks mit Hilfe von Sensoren vermessen wird. Jeder Sensor enthält Sender, Detektoren und Spiegelelemente.

GB 2,218,513 A beschreibt eine Messeinrichtung zur dreidimensionalen Beurteilung eines Objektes. Hierzu werden optische Sensoren eingesetzt.

EP 0 081 376 A2 beschreibt ein Arbeitsverfahren zur Herstellung einer Kurbelwelle, wobei eine Messeinrichtung die Oberfläche des Werkstücks abtastet. Die Messeinrichtung enthält einen Laser und zugehörige Detektoren.

EP 0 478 898 A2 beschreibt eine Prüfeinrichtung für rotationssymmetrische Werkstücke, bei der auf einem Messschlitten ein Lasermesskopf angeordnet ist. Mit Hilfe dieses Lasermesskopfs wird das Werkstück abgetastet. Der Messkopf arbeitet mit einem Messtaster zusammen, der Positionssignale abgibt.

US 2013/300861 A1 beschreibt eine Einrichtung und ein Verfahren zum Messen von dimensionellen Eigenschaften an rotationssymmetrischen Werkstücken. Die Oberfläche des jeweiligen Werkstücks wird mit Hilfe eines optischen Sensors abgetastet, der eine Strahlenquelle und Detektoren enthält.

Die Richtlinie VDA 2009 (VDA Verband der Automobilindustrie) beschreibt die Grundlagen, Kenngrößen und Anwendung eines optischen, berührungslosen Messverfahrens, das glänzende Oberflächen auf der Basis der Lichtstreuung charakterisiert. Das winkelaufgelöste Streulichtmessverfahren eignet sich aufgrund der Robustheit des Verfahrens und der hohen Messgeschwindigkeit sowohl zur 100 % Inline-Überwachung eines Fertigungsprozesses als auch speziell zur Erfassung der Rauheit in Bearbeitungsrichtung (Längsrauheit) und quer zur Bearbeitungsrichtung (Querrauheit). Gemessen wird die Winkelverteilung der Oberfläche über rückgestreutes Licht. Daraus können sowohl Kennwerte für die Mikrostruktur der Oberfläche als auch Formmerkmale, wie Rundheit und Rattermarken, berechnet werden. In dieser VDA 2009 sind die verschiedenen Kenngrößen und deren Bedeutung für die Oberflächencharakterisierung beschrieben.

In einem Aufsatz von Rainer Brodmann et al. "Kenngrößen der Mikrostruktur definiert", QZ Jahrgang 53 (2008) 7, S. 46 bis 49, wird die mit einem optischen Sensor realisierte Streulichtmesstechnik beschrieben und es werden weitere Erläuterungen zur oben genannten Richtlinie VDA 2009 gegeben.
Es ist Aufgabe der Erfindung, eine Einrichtung zum berührungslosen Messen der Gestaltabweichungen an Flanken von Getriebewellen anzugeben, bei der Rauheit, Form und Welligkeit entlang eines großen Abschnitts der Flanke mit hoher Geschwindigkeit und Präzision gemessen werden kann. Weiterhin soll ein zugehöriges Arbeitsverfahren angegeben werden. Diese Aufgabe wird mit der Merkmalskombination des unabhängigen Vorrichtungsanspruchs 1 gelöst. Diese Aufgabe wird gelöst durch eine Einrichtung mit einer Drehvorrichtung, die eine Getriebewelle lagert, mit einem optischen Sensor, der Licht auf die zu messende Oberfläche der Flanke aussendet und das reflektierte Licht erfasst und seine Streulichtverteilung zur Messung der Gestaltabweichungen auswertet, und mit einer den Sensor lagernden Antriebsvorrichtung, wobei die Antriebsvorrichtung den optischen Sensor parallel zur Längsachse der Getriebewelle in Synchronisation mit der Rotation der Getriebewelle bewegt, so dass der optische Sensor die Flanke der Getriebewelle entlang einem vorbestimmten Abschnitt kontinuierlich abtastet.
Durch die Verwendung des optischen Sensors, der auf der Basis der Streulichtmesstechnik arbeitet, ist eine berührungslose Messung der Funktionsfläche der Flanke möglich. Beispielsweise hat ein solcher optischer Sensor eine Abtastleistung von mehr als 1000 Abtastungen je Sekunde, so dass eine Flankenbahn kontinuierlich mit hoher Auflösung abgetastet und der Verlauf verschiedener Oberflächen-Kenngrößen entlang der Flankenbahn dargestellt werden kann. Hierbei können Kennwerte der Rauheit, der Welligkeit und der Rundheit ermittelt werden. Aufgrund der kontinuierlichen Abtastung können auch Oberflächendefekte, wie z.B. Krater, Dellen und Mikrorisse, erkannt werden.

Gemäß der Erfindung umfasst der optische Sensor ein Sendemodul und ein Spiegelmodul, wobei das Sendemodul eine Strahlungsquelle zum Aussenden von Strahlung annähernd entlang der Längsachse des Sensors und eine Detektorzeile quer zur Längsachse des Sensors mit einer Vielzahl von Detektoren enthält, und wobei das Spiegelmodul mittels eines Spiegels die ausgesendete Strahlung quer zur Längsachse des Sensors auf die Oberfläche der Flanke lenkt und das reflektierte Licht in Richtung der Detektorzeile ablenkt. Während der Vermessung der Flankenbahn sollte das Licht annähernd senkrecht auf die Flanke der Getriebewelle oder der Schneckenwelle einfallen. Mit Hilfe des Spiegelmoduls wird einerseits eine Querablenkung des Lichtes ermöglicht und andererseits kann das Spiegelmodul eine solche geometrische spitze Form haben, dass es optimal zwischen zwei benachbarten Zahnflanken eingreifen kann, um Licht im Bereich des Teilkreisdurchmessers auf die Flanke zu lenken.

Das Sendemodul des optischen Sensors ist im Drehlager unabhängig vom Spiegelmodul drehbar gelagert und ist mittels einer ersten Rotationsvorrichtung verdrehbar, vorzugsweise in einem Winkelbereich von 0° bis 90°. Der optische Sensor hat typischerweise einen Aufbau, bei dem das gestreute reflektierte Licht mittels einer linearen Detektorzeile mit einer Vielzahl von Detektoren erfasst wird, und aus den gemessenen Signalen werden Oberflächenkennwerte berechnet. Die Ausrichtung der Detektorzeile erfolgt so, dass entweder die Querrauheit oder die Längsrauheit ermittelt wird, d.h. die Rauheit quer oder längs zur Bearbeitungsrichtung eines spanabhebenden Werkzeugs zur Herstellung der Flanken. Längs- und Querrauheit sind allgemein um 90° gegeneinander verdreht. Durch die genannten Maßnahmen kann bei einer vorgegebenen Position des Spiegelmoduls in einem ersten Messvorgang die Längsrauheit und in einem weiteren Messvorgang die Querrauheit und die zugehörigen Oberflächenkenngrößen ermittelt werden.

Bei der Erfindung ist das Spiegelmodul in einem Drehlager in der Antriebsvorrichtung gelagert und ist relativ zum Sendemodul mittels einer zweiten Rotationsvorrichtung verdrehbar. Insbesondere kann das Spiegelmodul ausgehend von einer Ausgangslage um 180° in einer einzigen Bewegung verschwenkt werden. Auf diese Weise wird erreicht, dass mit dem optischen Sensor, der in den Gang der Schneckenwelle oder allgemein der Getriebewelle eingreift in einer ersten Position des Spiegelmoduls die rechte Flanke und in der um 180° verdrehten zweiten Position des Spiegelmoduls die linke Flanke abtastet. Vorteilhafterweise werden an einer Getriebewelle mindestens zwei Messvorgänge durchgeführt, wobei in einem ersten Messvorgang die Flankenbahn der einen Flanke und in einem weiteren Messvorgang die Flankenbahn der anderen Flanke kontinuierlich abgetastet wird. Zwischen diesen beiden Messvorgängen wird das Spiegelmodul um 180° verschwenkt. Die Ausgangslage kann vorzugsweise so gewählt werden, dass die Steigung der zu messenden Flanke berücksichtigt wird. Diese Ausgangslage
dann so definiert, dass das vom Sendemodul ausgesendete Licht in Normalenrichtung auf die Flanke auftrifft.

Vorteilhaft ist es, wenn das Spiegelmodul austauschbar in der Antriebsvorrichtung gelagert ist und mehrere Spiegelmodule mit unterschiedlicher Geometrie bereitgehalten sind, wobei abhängig von der Geometrie der Flanken der Getriebewelle ein geeignetes Spiegelmodul ausgewählt und eingesetzt wird. Bei unterschiedlichen Flankenwinkeln und bei unterschiedlichen Abmessungen der Schnecke einer Schneckenwelle oder der Verzahnung einer Zahnwelle kann ein vorgegebenes Spiegelmodul schnell durch ein anderes Spiegelmodul ausgetauscht werden. Vorteilhaft ist, wenn das Spiegelmodul über eine magnetische Kupplung mit dem optischen Sensor und der Rotationsvorrichtung zum Verdrehen des Spiegelmoduls verbunden ist. Das Spiegelmodul kann sich hierbei durch einen Passstift selbst justieren.

Ein weiteres vorteilhaftes Ausführungsbeispiel sieht vor, dass ein berührend arbeitender Messtaster eine Mittenposition zwischen zwei benachbarten Flanken der Getriebewelle ermittelt, wobei eine Steuerung abhängig von der festgestellten Mittenposition den optischen Sensor in Richtung parallel zur Längsachse der Getriebewelle durch die Antriebsvorrichtung in eine Anfangsstellung bewegt, in der er mit seinem Spiegelmodul in einer mittleren Position zwischen zwei benachbarten Flanken der Getriebewelle gegenübersteht. Die Antriebsvorrichtung wird dann so angesteuert, dass der optische Sensor mit dem Spiegelmodul in Richtung senkrecht zur Längsachse der Getriebewelle verschoben wird, um einen Abschnitt einer der Flanken abzutasten. Der berührend arbeitende Messtaster bildet somit eine Hilfsmessvorrichtung, durch die die Orientierung der Flanken der Schneckenwelle oder des Zahnrads auf eine schnelle Weise bestimmt wird, so dass das Spiegelmodul ungehindert zwischen die Flanken zum Messen eingefahren werden kann. Damit wird einerseits eine definierte Anfangsposition für das Messen der Oberfläche der Flanken festgelegt und andererseits das empfindliche Spiegelmodul und die Flankenoberfläche werden nicht beschädigt.

Gemäß einem weiteren Aspekt der Erfindung wird ein Verfahren gemäß dem unabhängigen Verfahrensanspruch 9 zum berührungslosen Messen von Gestaltabweichungen an Flanken von Getriebewellen, vorzugsweise an Flanken von Schneckenwellen oder Zahnrädern, angegeben. Dieses Verfahren weist die bereits im Zusammenhang mit der Einrichtung nach der Erfindung genannten technischen Vorteile auf. Vorteilhafte Weiterbildungen der Erfindung sind Gegenstand der abhängigen Ansprüche. Ausführungsbeispiele werden nachfolgend anhand der Figuren erläutert. Darin zeigt:
- Figur 1: eine perspektivische Ansicht der Einrichtung zum berührungslosen Messen an Flanken einer Schneckenwelle,
- Figur 2: eine perspektivische Ansicht der Antriebsvorrichtung und des Spiegelmoduls,
- Figur 3: eine schematische Ansicht zur Erläuterung verschiedener Messmöglichkeiten,
- Figur 4: eine Zusammenstellung der verschiedenen Messvarianten, und
- Figur 5: eine Anwendung der Oberflächenmessung an einem Zahnrad.

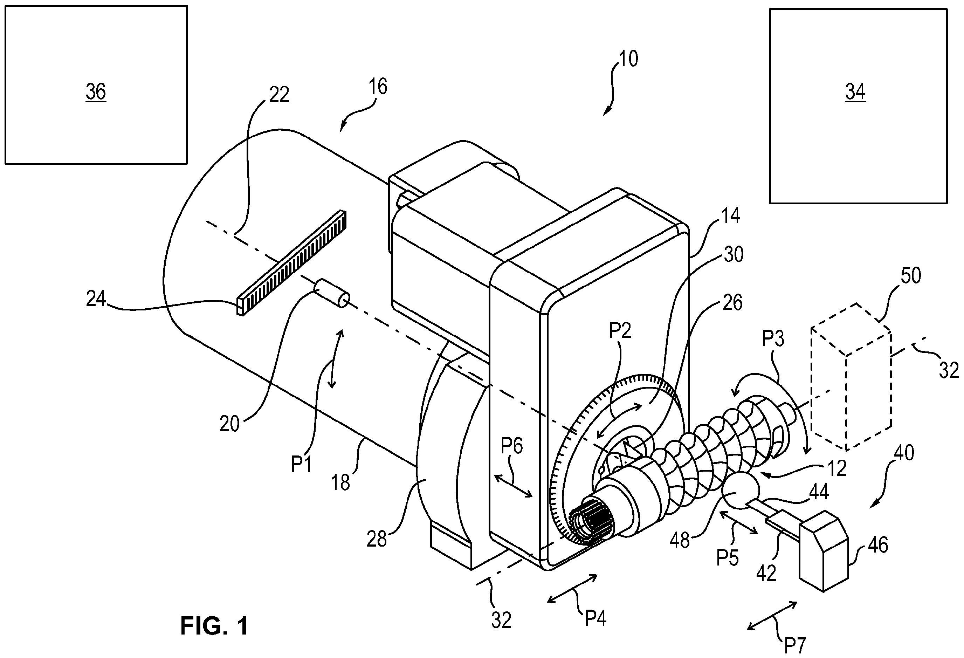

In der Figur 1 ist eine Einrichtung 10 zum berührungslosen Messen von mikroskopischen und makroskopischen Gestaltabweichungen an den Flanken einer Schneckenwelle 12 dargestellt. Diese Einrichtung 10 umfasst eine Antriebsvorrichtung 14, die einen optischen Sensor 16 lagert. Dieser optische Sensor 16 umfasst ein Sendemodul 18, welches eine Strahlungsquelle 20 zum Aussenden von Strahlung annähernd entlang einer Längsachse 22 des Sensor 16 umfasst. Der Sensor 16 arbeitet nach dem winkelaufgelösten Streulichtmessverfahren, wie dies weiter vorne bei der Abhandlung des Standes der Technik beschrieben ist (z.B. Richtlinie VDA 2009). Das von einer Oberfläche reflektierte Streulicht wird von einer Detektorzeile 24 erfasst und auf der Grundlage von statistischen Methoden werden verschiedene Kenngrößen zur Beurteilung der Rauheit, Rundheit, Rattermarken, Mikrorisse etc. ermittelt.

Der Sensor 16 umfasst zwei Module, nämlich das bereits erwähnte Sendemodul 18 und ein in der Figur 1 nur teilweise zu erkennendes Spiegelmodul 26. Beide Module 16, 26 sind in der Antriebsvorrichtung 14 drehbar gelagert, nämlich das Sendemodul 18 in einer ersten Rotationsvorrichtung 28 und das Spiegelmodul 26 in einer zweiten Rotationsvorrichtung 30. Die zugehörigen motorischen Antriebe sind in Figur 1 nicht zu sehen. Angesteuert durch eine Steuerung (nicht dargestellt) verdreht die erste Rotationsvorrichtung 28 das Sendemodul in Richtung des Doppelpfeils P1 in einem Winkel von 0° bis 90°. Vorzugsweise wird das Sendemodul 18 zwischen zwei Positionen hin- und hergeschwenkt, die durch 0° und 90° definiert sind. Damit erfasst die Detektorzeile 24 einmal das rückgestreute Licht in der in Figur 1 dargestellten Ebene (Position 0°) und ein andermal senkrecht hierzu (Position 90°), wodurch einmal die Querrauheit an der Flanke der Schneckenwelle 12 und ein andermal die Längsrauheit erfasst und ausgewertet wird.

Das Spiegelmodul 26 kann durch die zweite Rotationsvorrichtung 30 in Richtung des Doppelpfeils P2 verdreht werden, insbesondere wird das Spiegelmodul 26 zwischen zwei um 180° gegeneinander verschobenen Positionen verdreht. In der einen Position (Position 0° + ϕ wird eine erste Flanke der Schneckenwelle 12 vermessen und in der anderen Position (Position 180°+ ϕ) die andere Flanke. Abhängig von der Ganghöhe der Schneckenwelle 12 verlaufen die Flanken schräg unter einem Winkel ϕ zu einer Ebene senkrecht zur Längsachse 32 der Schneckenwelle 12. Damit das auf die Flanken einfallende Licht des Sensors 16 möglichst in Normalenrichtung der Flanken auftrifft, wird die Position des Sensors 16 um diesen Winkel ϕ voreingestellt. Dies erfolgt vorzugsweise in Richtung P2.

Die Schneckenwelle 12 ist durch eine Drehvorrichtung 50 (in Figur 1 nur angedeutet) gelagert und kann um ihre Längsachse 32 um definierte Drehwinkel verdreht werden, wie dies durch den Doppelpfeil P3 angezeigt ist. Die Antriebsvorrichtung 14 ist in einer Achse parallel zur Längsachse 32 gemäß dem Pfeil P4 zusammen mit dem Sensor 16 verschiebbar. Eine Steuerung 34 nach Art einer CNC-Steuerung steuert die erste Rotationsvorrichtung 28, die zweite Rotationsvorrichtung 30 und die Drehvorrichtung 50 zur Drehung der Schneckenwelle 12 an. Hierbei bewegt die Antriebsvorrichtung 14 den optischen Sensor 16 parallel zur Längsachse 32 der Schneckenwelle 12 in Synchronisation mit der Rotation der Kurbelwelle 12, so dass der optische Sensor 16 eine Flanke der Schneckenwelle 12 entlang einem vorgegebenen Abschnitt kontinuierlich abtastet, wobei eine Sensorsteuerung 36 fortlaufend Oberflächenkennwerte aus der gemessenen Streulichtverteilung berechnet. Beide Steuerungen 34, 36 kommunizieren miteinander, so dass die Abtastung der Flankenbahn und die Bewegung entlang dieser Flankenbahn synchronisiert ist.

Die gesamte Einrichtung enthält noch eine Hilfsmessvorrichtung 40. Diese dient zum schnellen Ermitteln einer Anfangsstellung für den optischen Sensor 16. Die Hilfsmessvorrichtung 40 umfasst einen berührend arbeitenden Messtaster 42, der als Längenmesseinrichtung mit seiner Messspitze 44 in Richtung des Doppelpfeils P5 bewegbar ist. Der Messtaster 42 ist in einer Halterung 46 gelagert, die in einer Variante eine Festposition des Messtasters 42 in Bezug auf die Längsachse 32 definiert. Der Messtaster 42 hat an seiner Messspitze 44 eine Messkugel 48, vorzugsweise aus Rubin, deren Durchmesser größer ist als der mittlere Abstand zwischen benachbarten Flanken der Schneckenwelle 12. Die Messspitze 44 ist federbelastet und bei einer langsamen Drehung der Schneckenwelle um den Pfeil P3 taucht die Messkugel 48 mit ihrem unteren Kugelabschnitt geringfügig in die Tiefe des Schneckenganges ein. Dieser Kugelabschnitt erreicht dabei nicht den Boden des Schneckenganges, sondern verbleibt weit oberhalb davon. Bei einer vollen Umdrehung der Schneckenwelle 12 wird von der Steuerung 34 der Verlauf der Eintauchtiefe der Messkugel 48 über den Drehwinkel der Schneckenwelle 12 erfasst. Die maximale Tiefe definiert die Mittenposition des Messtasters 42 zwischen zwei benachbarten Flanken der Schneckenwelle 12. Mit dem zugehörigen Drehwinkel der Schneckenwelle 12 ist diese Mittenposition des Messtasters in Bezug auf die Längsachse 32 der Schneckenwelle 12 eindeutig definiert und die Steuerung 34 kann abhängig von dieser Position die Antriebsvorrichtung 14 in eine Anfangsstellung entlang einer Achse parallel zur Längsachse 32 verschieben, in der die Spitze des Spiegelmoduls 26 (und damit der Längsachse 22 des Sensors 16) wiederum in einer mittleren Position zwischen zwei benachbarten Flanken der Schneckenwelle 12 gegenübersteht. Eine solche Position kann auf einfache Weise aufgrund der bekannten Ganghöhe der Schneckenwelle 12 und gegebenenfalls aufgrund einer bekannten Mehrgängigkeit berechnet werden.

Die Antriebsvorrichtung 14 ist auch in einer Richtung senkrecht zur Längsachse 32 entlang dem Doppelpfeil P6 bewegbar (in Richtung der Längsachse 22 des Sensors 16), so dass das Spiegelmodul 26 zwischen benachbarten Flanken eintauchen kann, um einen Abschnitt einer der Flanken, vorzugsweise im Bereich des Teilkreisdurchmessers der Schneckenwelle 12, abzutasten. Auf diese Weise wird einerseits eine definierte Anfangsposition für das Messen der Oberfläche der Flanke festgelegt und andererseits werden das empfindliche Spiegelmodul 26 und die zu messende Flankenoberfläche nicht beschädigt.

Es ist in einer anderen Variante auch möglich, die Halterung 46 zusammen mit dem Messtaster 42 parallel zur Längsachse 32 entlang dem Doppelpfeil P7 zu bewegen und bei feststehender Schneckenwelle 12 die maximale Eintauchtiefe der Messkugel 48 zu ermitteln, welche die Mittenposition des Messtasters 42 zwischen zwei benachbarten Flanken der Schneckenwelle 12 definiert. Aus den zugehörigen Koordinaten der Halterung 46 und dem Drehwinkel bei Stillstand der Schneckenwelle 12 kann die Anfangsstellung für den Sensor 16 zum Messen der Flanke berechnet werden.

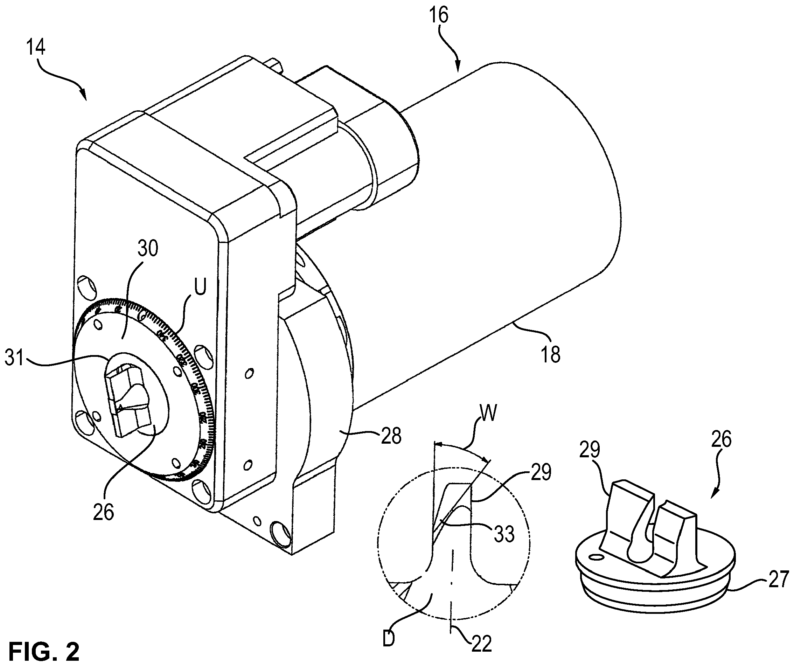

Figur 2 zeigt die Antriebsvorrichtung 14 in einer perspektivischen Ansicht. Die zweite Rotationsvorrichtung 30 ist als Drehteller mit Umfangsmarkierung U ausgebildet, die in einer Aufnahmeöffnung 31 das Spiegelmodul 26 austauschbar aufnimmt. Das Spiegelmodul 26 ist rechts in Figur 2 als Austauschbauteil näher dargestellt. Es umfasst eine ringförmige Halterung 27, die wiederum eine vorstehende Spiegelhalterung 29 mit Durchgangsöffnung D aufnimmt. Diese Spiegelhalterung 29 ist als Detailzeichnung in der Mitte der Figur 2 wiedergegeben und enthält eine schräge Aufnahmefläche 33, die mit der Längsachse 22 einen Winkel w einschließt. Diese Aufnahmefläche 33 trägt im Gebrauchszustand einen Spiegel (hier aus Übersichtsgründen weggelassen), an welchem ein entlang der Achse 22 und der Durchgangsöffnung D einfallender Lichtstrahl der Lichtquelle 20 des Sendemoduls 18 nach rechts zu einer Flankenoberfläche abgelenkt wird. Mit Hilfe des austauschbaren Spiegelmoduls 26 kann je nach Anwendungsfall eine Anpassung an die Messaufgabe erfolgen. Es werden mehrere Spiegelmodule mit unterschiedlicher Geometrie bereitgehalten, beispielsweise mit unterschiedlichem Winkel w oder mit unterschiedlicher Geometrie der zwischen Flanken eintauchenden Spiegelhalterung 29. Abhängig von der Geometrie der zu messenden Flanken der Schneckenwelle oder einer anderen Getriebewelle kann ein geeignetes Spiegelmodul ausgewählt und in die Aufnahme 31 eingesetzt werden. Das jeweilige Spiegelmodul 26 wird dann mittels einer Magnetkupplung in der Aufnahme 31 fixiert, wobei mit Hilfe eines Justierstiftes und einer Justierbohrung eine Selbstjustierung erfolgt.

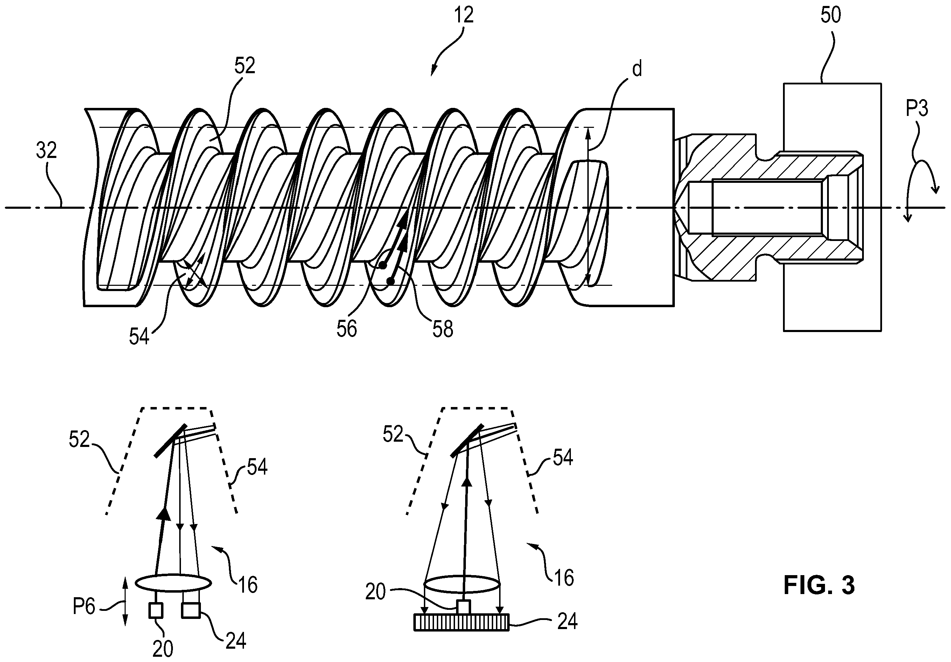

Figur 3 zeigt eine schematische Darstellung der Schneckenwelle 12, die auf einer Seite in die bereits weiter vorne erwähnte Drehvorrichtung 50 eingespannt ist. Typischerweise wird eine Einspannung zwischen Spitzen gewählt, um einen präzisen Rundlauf der Schneckenwelle 12 beim Messvorgang zu erreichen. Die Schneckenwelle 12 hat ihre wichtige Funktionsfläche an den Flanken 52, 54 im Bereich des Teilkreisdurchmessers d. An der rechten Flanke 54 sind durch Doppelpfeile die Längsrauheit in Umfangsrichtung (und damit in Bearbeitungsrichtung) und senkrecht hierzu die Querrauheit angedeutet.

Schematisch ist unterhalb der Schneckenwelle 12 der Strahlengang für den optischen Sensor 16 bei der Messung an der Flanke 54 dargestellt. Der Sensor 16 ist entlang des Doppelpfeils P6 bewegbar und wird zur Messung zwischen die Flanken 52, 54 eingefahren. Im linken schematischen Bildteil ist das Sendemodul 18 so eingestellt, dass die Detektorzeile 24 mit ihrer Längsachse senkrecht zur Längsachse 32 der Schneckenwelle 12 verläuft. Demnach wird Streulicht ausgewertet, welches sich entlang dieser auf der Papierebene stehenden Achse verteilt, welches zur Längsrauheit (Rauheit in Bearbeitungsrichtung) gehört. Im rechten Bildteil verläuft die Achse der Detektorzeile 24 parallel zur Längsachse 32 der Schneckenwelle 12, so dass Streulicht entlang dieser Achse ausgewertet wird. Dieses Streulicht gehört zur Querrauheit (Rauheit quer zur Bearbeitungsrichtung der Flanke 54). Die entsprechende Stellung der Detektorzeile 24 wird durch Verdrehen des Sendemoduls 18 im Winkelbereich von 0° bis 90° eingestellt. In beiden Messpositionen bleibt das Spiegelmodul 26 in gleicher Position und lenkt den einfallenden Lichtstrahl zur Flanke 54.

Um die linke Flanke 52 zu messen, wird das Spiegelmodul 26 durch die zweite Rotationsvorrichtung 30 um 180° gedreht, so dass das einfallende Licht annähernd senkrecht auf die linke Flanke 52 auftrifft. In dieser Position kann dann je nach Position des Sendemoduls 18 die Längsrauheit bzw. die Querrauheit gemessen werden. In gleicher Weise kann auch der Verlauf der Welligkeit in Bearbeitungsrichtung oder quer zur Bearbeitungsrichtung durch Bewegung des Sensors 16 in Richtung des Pfeils P6 festgestellt werden. Gegebenenfalls ist ein Nachstellen des Sensors 16 in Richtung parallel zur Längsachse 32 erforderlich, um innerhalb eines Ganges der Schneckenwelle 12 den einfallenden Lichtstrahl auf die jeweilige Flanke 52, 54 zu fokussieren. Die Pfeile 56, 58 bezeichnen Flankenbahnen, entlang denen die Verläufe der Oberflächenkenngrößen bei Rotation der Schneckenwelle 12 und synchronem Verstellen des Sensors 16 in Richtung parallel zur Längsachse 32 ermittelt werden können.

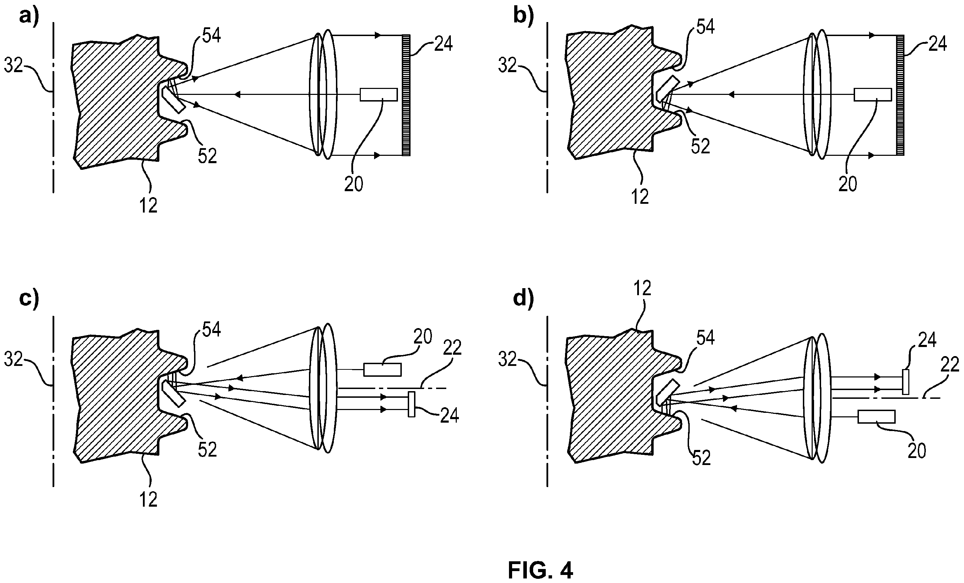

Die Flanken 52, 54 einer Schneckenwelle 12 sind anders als in der Figur 3 unten vereinfacht schematisch dargestellt, häufig konvex gewölbt und bilden eine Evolventenfläche, was zu einem Messfehler bei der winkelaufgelösten Messung führen kann. Dies ist besonders bei der Messung der Längsrauheit kritisch (linke Schemazeichnung in Figur 3), weil das zurückgestreute Licht nicht mehr voll auf die Detektorzeile 24 auftrifft. Dies kann in einem gewissen Maße kompensiert werden, indem vor die Detektorzeile 24 eine Zylinderlinse mit vergrößertem Öffnungswinkel in Richtung parallel der Längsachse 32 eingefügt wird. Diese Zylinderlinse sammelt das Licht in einem vergrößerten Winkelbereich und führt dieses Licht der Detektorzeile 24 zu und kompensiert somit das Auslenken der Streulichtverteilung. In Figur 4 ist die Wölbung der jeweiligen Flanke 52, 54 zu erkennen.

Figur 4 zeigt in vier schematischen Darstellungen a) bis d) den Strahlengang zum Messen der Querrauheit bzw. der Längsrauheit an der linken Flanke 54 bzw. an der rechten Flanke 52 der Schneckenwelle 12. In der Darstellung a) hat das Sendemodul 18 die Position, in der die Detektorzeile 24 parallel zur Längsachse 32 der Schneckenwelle verläuft, d.h. es wird die Streulichtverteilung quer zur Bearbeitungsrichtung und damit die Querrauheit gemessen. Das Spiegelmodul 26 ist so ausgerichtet, dass es die rechte Flanke 54 vermisst. In der Darstellung b) ist die Position für das Sendemodul 18 beibehalten, d.h. es wird die Querrauheit gemessen. Das Spiegelmodul 26 ist um 180° verschwenkt, so dass die linke Flanke 52 vermessen wird. In der Darstellung c) hat das Spiegelmodul 26 die Position wie in der Darstellung a), d.h. es wird die rechte Flanke 54 vermessen. Das Sendemodul 18 ist um 90° verdreht und die rückgestreute Strahlung wird der Detektorzeile 24 zugeführt. Die Längsachse der Detektorzeile 24 verläuft senkrecht zur Längsachse 32 der Schneckenwelle 12 und es wird die Rauheit in Umfangsrichtung der rechten Flanke 54, d.h. in Bearbeitungsrichtung gemessen. Dies entspricht der Längsrauheit der Oberfläche der Flanke 54. In der Darstellung d) ist das Spiegelmodul 26 um 180° verdreht und es wird die Längsrauheit an der linken Flanke 52 gemessen.

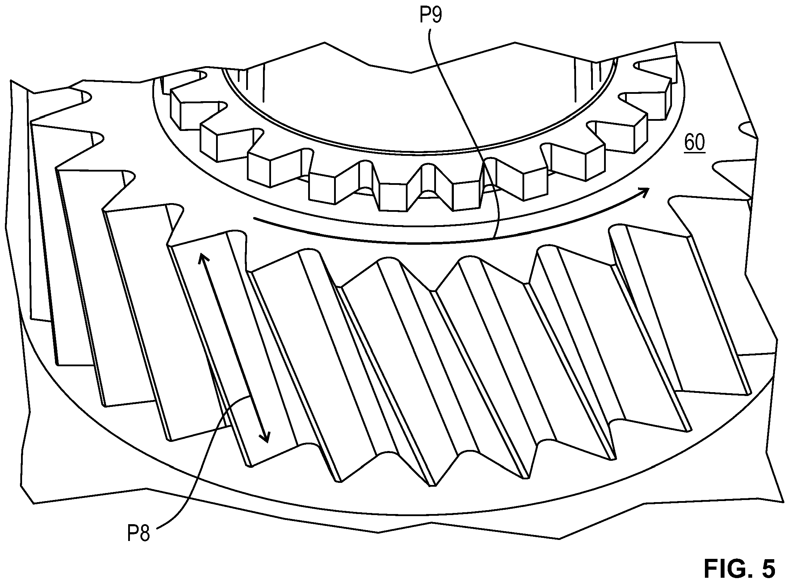

Figur 5 zeigt ein weiteres Anwendungsbeispiel der berührungslosen Messung von Gestaltabweichungen an den Flanken eines Zahnrades 60. Bei einer Synchronisierung der Bewegung des optischen Sensors 16 und der Winkeldrehung des Zahnrads in Richtung P9, kann eine Flankenbahn gemäß dem Pfeil P8 an der Zahnflanke kontinuierlich vermessen werden.

In den Beispielen nach den Figuren 1 bis 4 wurde die Schneckenwelle 12 horizontal zwischen Spitzen gelagert. Ebenso kann die Schneckenwelle 12 auch vertikal gelagert werden, wodurch ggfs. das Hantieren erleichtert wird.

### Bezugszeichenliste

- 10: Einrichtung zum berührungslosen Messen
- 12: Schneckenwelle
- 14: Antriebsvorrichtung
- 16: optischer Sensor
- 18: Sendemodul
- 20: Strahlungsquelle
- 22: Längsachse des Sensors
- 24: Detektorzeile
- 26: Spiegelmodul
- 27: Halterung
- 28: erste Rotationsvorrichtung
- 29: Spiegelhalterung
- 30: zweite Rotationsvorrichtung
- P1 bis P8: Richtungspfeile
- 32: Längsachse der Schneckenwelle
- 31: Aufnahme
- 33: schräge Aufnahmefläche
- 34: Steuerung
- 36: Sensorsteuerung
- 40: Hilfsmessvorrichtung
- 42: Messtaster
- 44: Messspitze
- 46: Halterung
- 48: Messkugel
- U: Umfangsmarkierung
- D: Durchgangsöffnung
- 52: linke Flanke
- 54: rechte Flanke
- D: Teilkreisdurchmesser
- 56, 58: Flankenbahnen
- 60: Zahnrad

## Patentansprüche

1. Einrichtung zum berührungslosen Messen von Gestaltabweichungen an Flanken von Getriebewellen, vorzugsweise an Flanken von Schneckenwellen oder Zahnrädern,
mit einer Drehvorrichtung (50), die dazu eingerichtet ist, eine Getriebewelle (12) zu lagern, einem optischen Sensor (16), der dazu eingerichtet ist, Licht auf die zu messende Oberfläche der Flanke (52, 54) auszusenden und das reflektierte Licht zu erfassen und seine Streulichtverteilung zur Messung der Gestaltabweichungen auszuwerten, und mit einer den Sensor (16) lagernden Antriebsvorrichtung (14),
wobei die Antriebsvorrichtung (14) dazu eingerichtet ist, den optischen Sensor (16) parallel zur Längsachse (32) der Getriebewelle (12) in Synchronisation mit der Rotation der Getriebewelle (12) zu bewegen, so dass der optische Sensor (16) die Flanke (52, 54) der Getriebewellelle (12) entlang einem vorbestimmten Abschnitt kontinuierlich abtastet,
und wobei der optische Sensor (16) umfasst, ein Sendemodul (18), das eine Strahlungsquelle (20) zum Aussenden von Strahlung entlang der Längsachse (22) des Sensors (16) und eine Detektorzeile (24) mit einer Vielzahl von Detektoren enthält,
sowie ein Spiegelmodul (26), das mittels eines Spiegels, dazu eingerichtet ist, die ausgesendete Strahlung quer zur Längsachse (22) des Sensors (16) auf die Flanke (52, 54) zu lenken und das reflektierte Licht in Richtung der Detektorzeile (24) abzulenken, **dadurch gekennzeichnet, dass** das Sendemodul (18) unabhängig vom Spiegelmodul drehbar gelagert ist und mittels einer ersten Rotationsvorrichtung (28) verdrehbar ist,
und dass das Spiegelmodul (26) in einer zweiten Rotationsvorrichtung (30) in der Antriebsvorrichtung (14) gelagert ist und relativ zum Sendemodul (18) verdrehbar ist.

2. Einrichtung nach Anspruch 1, **dadurch gekennzeichnet, dass** die erste Rotationsvorrichtung (28) in einem Winkelbereich von 0° bis 90° verdrehbar ist.

3. Einrichtung nach Anspruch 1 oder Anspruch 2, **dadurch gekennzeichnet, dass** die zweite Rotationsvorrichtung (30) um 180° verdrehbar ist.

4. Einrichtung nach einem der vorhergehenden Ansprüche, **dadurch gekennzeichnet, dass** das Spiegelmodul (26) austauschbar gelagert ist, dass mehrere Spiegelmodule mit unterschiedlicher Geometrie bereitgehalten sind, und dass abhängig von der Geometrie der Flanken der Getriebewelle ein geeignetes Spiegelmodul ausgewählt und eingesetzt wird.

5. Einrichtung nach einem der vorhergehenden Ansprüche, **dadurch gekennzeichnet, dass** die Antriebsvorrichtung (14) den Sensor senkrecht zur Längsachse (32) der Getriebewelle (12) verschiebbar lagert.

6. Einrichtung nach einem der vorhergehenden Ansprüche, **dadurch gekennzeichnet, dass** ein berührend arbeitender Messtaster (42) eine Mittenposition des Messtasters (42) zwischen zwei benachbarten Flanken der Getriebewelle (12) ermittelt,
dass eine Steuerung (34) vorgesehen ist, die abhängig von der festgestellten Mittenposition den optischen Sensor (16) in Richtung parallel zur Längsachse (32) der Getriebewelle (12) durch die Antriebsvorrichtung (14) in eine Anfangsstellung verschiebt, in der er mit seinem Spiegelmodul (26) in einer mittleren Position zwischen zwei benachbarten Flanken der Getriebewelle (12) gegenübersteht,
und dass die Antriebsvorrichtung (14) den Sensor (16) mit dem Spiegelmodul (26) in Richtung senkrecht zur Längsachse (32) der Getriebewelle (12) verschiebt, um einen Abschnitt einer der Flanken (52, 54) abzutasten.

7. Einrichtung nach Anspruch 6, **dadurch gekennzeichnet, dass** der Messtaster (42) eine Messkugel (48) umfasst, vorzugsweise aus Rubin, deren Durchmesser größer ist als der mittlere Abstand zwischen benachbarten Flanken,
und dass die tiefste Stelle der Messkugel (48) bei einer Bewegung der Messkugel (48) zwischen zwei Flanken bei einer vollen Umdrehung der Getriebewelle (12) als Mittenposition des Messtasters (42) in Richtung parallel zur Längsachse (32) der Getriebewelle (12) festgelegt wird.

8. Einrichtung nach einem der vorhergehenden Ansprüche, **dadurch gekennzeichnet, dass** vor der Detektorzeile (24) eine Zylinderlinse angeordnet ist, die das reflektierte gestreute Licht in einem vergrößerten Winkelbereich sammelt und den Detektoren der Detektorzeile (24) zuführt.

9. Verfahren zum berührungslosen Messen von Gestaltabweichungen an Flanken von Getriebewellen, vorzugsweise an Flanken von Schneckenwellen oder Zahnrädern, bei dem die Getriebewelle (12) durch eine Drehvorrichtung (50) zur Rotation der Getriebewelle (12) gelagert ist, bei dem durch einen optischen Sensor (16) Licht auf die zu messende Oberfläche der Flanke (52, 54) ausgesendet und das reflektierte Licht erfasst und seine Streulichtverteilung zur Messung der Gestaltabweichungen ausgewertet wird,
und bei dem eine Antriebsvorrichtung (14) den optischen Sensor (16) parallel zur Längsachse (32) der Getriebewelle (12) in Synchronisation mit der Rotation der Getriebewelle (12) bewegt, so dass der optische Sensor (16) die Flanke (52, 54) der Getriebewellelle (12) entlang einem vorbestimmten Abschnitt kontinuierlich abtastet,
wobei der optische Sensor (16) umfasst, ein Sendemodul (18), das eine Strahlungsquelle (20) zum Aussenden von Strahlung entlang der Längsachse (22) des Sensors (16) und eine Detektorzeile (24) mit einer Vielzahl von Detektoren enthält,
sowie ein Spiegelmodul (26), das mittels eines Spiegels die ausgesendete Strahlung quer zur Längsachse (22) des Sensors (16) auf die Flanke (52, 54) lenkt und das reflektierte Licht in Richtung der Detektorzeile (24) ablenkt,
**dadurch gekennzeichnet, dass** das Sendemodul (18) unabhängig vom Spiegelmodul drehbar gelagert wird und mittels einer ersten Rotationsvorrichtung (28) verdrehbar ist,
und dass das Spiegelmodul (26) in einer zweiten Rotationsvorrichtung (30) in der Antriebsvorrichtung (14) gelagert wird und relativ zum Sendemodul (18) verdrehbar ist.

10. Verfahren nach Anspruch 9, **dadurch gekennzeichnet, dass** die erste Rotationsvorrichtung (28) in einem Winkelbereich von 0° bis 90° verdreht wird.

11. Verfahren nach Anspruch 9 oder Anspruch 10, **dadurch gekennzeichnet, dass** die zweite Rotationsvorrichtung (30) um 180° verdreht wird.

12. Verfahren nach einem der vorhergehenden Ansprüche 9 bis 11, **dadurch gekennzeichnet, dass** das Spiegelmodul (26) austauschbar gelagert wird, dass mehrere Spiegelmodule mit unterschiedlicher Geometrie bereitgehalten werden, und dass abhängig von der Geometrie der Flanken der Getriebewelle ein geeignetes Spiegelmodul ausgewählt und eingesetzt wird.

13. Verfahren nach einem der vorhergehenden Ansprüche, **dadurch gekennzeichnet, dass** ein berührend arbeitender Messtaster (42) eine Mittenposition des Messtasters (42) zwischen zwei benachbarten Flanken der Getriebewelle (12) ermittelt,
dass eine Steuerung (34) vorgesehen ist, die abhängig von der festgestellten Mittenposition den optischen Sensor (16) in Richtung parallel zur Längsachse (32) der Getriebewelle (12) durch die Antriebsvorrichtung (14) in eine Anfangsstellung verschiebt, in der er mit seinem Spiegelmodul (26) in einer mittleren Position zwischen zwei benachbarten Flanken der Getriebewelle (12) gegenübersteht,
und dass die Antriebsvorrichtung (14) den Sensor (16) mit dem Spiegelmodul (26) in Richtung senkrecht zur Längsachse (32) der Getriebewelle (12) verschiebt, um einen Abschnitt einer der Flanken (52, 54) abzutasten.

## Claims

1. A device for the contactless measurement of form deviations on flanks of gear shafts, preferably on flanks of worm shafts or gear wheels,
with a rotating device (50) which is configured to mount a gear shaft (12),
an optical sensor (16) which is configured to emit light onto the surface of the flank (52, 54) to be measured and to detect the reflected light and to evaluate its scattered light distribution for measuring the form deviations,
and with a drive device (14) mounting the sensor (16),
wherein the drive device (14) is configured to move the optical sensor (16) parallel to the longitudinal axis (32) of the gear shaft (12) in synchronization with the rotation of the gear shaft (12) so that the optical sensor (16) continuously scans the flank (52, 54) of the gear shaft (12) along a predetermined section,
and wherein the optical sensor (16) comprises a transmitter module (18) including a radiation source (20) for emitting radiation along the longitudinal axis (22) of the sensor (16) and a detector line (24) with a plurality of detectors,
as well as a mirror module (26) which by means of a mirror is configured to direct the emitted radiation transversely to the longitudinal axis (22) of the sensor (16) onto the flank (52, 54) and to deflect the reflected light toward the detector line (24),
**characterized in that** the transmitter module (18) is rotatably mounted independent of the mirror module and is rotatable by means of a first rotation device (28),
and that the mirror module (26) is mounted in a second rotation device (30) in the drive device (14) and is rotatable relative to the transmitter module (18).

2. The device according to claim 1, **characterized in that** the first rotation device (28) is rotatable in an angle range from 0° to 90°.

3. The device according to claim 1 or claim 2, **characterized in that** the second rotation device (30) is rotatable by 180°.

4. The device according to one of the preceding claims, **characterized in that** the mirror module (26) is mounted exchangeably, that several mirror modules with different geometries are kept ready, and that dependent on the geometry of the flanks of the gear shaft a suitable mirror module is chosen and inserted.

5. The device according to one of the preceding claims, **characterized in that** the drive device (14) mounts the sensor so as to be displaceable perpendicularly to the longitudinal axis (32) of the gear shaft (12).

6. The device according to one of the preceding claims, **characterized in that** a contacting measuring sensor (42) determines a center position of the measuring sensor (42) between two adjacent flanks of the gear shaft (12),
that a control (34) is provided which dependent on the determined center position moves the optical sensor (16) in a direction parallel to the longitudinal axis (32) of the gear shaft (12) by the drive device (14) into an initial position, in which it is opposite to the gear shaft (12) with its mirror module (26) in a middle position between two adjacent flanks,
and that the drive device (14) moves the sensor (16) with the mirror module (26) in a direction perpendicular to the longitudinal axis (32) of the gear shaft (12) to scan a section of one of the flanks (52, 54).

7. The device according to claim 6, **characterized in that** the measuring sensor (42) comprises a calibrated ball (48), preferably made of ruby, the diameter of which is greater than the middle distance between adjacent flanks,
and that the deepest point of the calibrated ball (48) upon a movement of the calibrated ball (48) between two flanks given a full rotation of the gear shaft (12) is determined as a center positon of the measuring sensor (42) in a direction parallel to the longitudinal axis (32) of the gear shaft (12).

8. The device according to one of the preceding claims, **characterized in that** in front of the detector line (24) a cylinder lens is arranged which collects the reflected scattered light in an enlarged angle range and feeds it to the detectors of the detector line (24).

9. A method for the contactless measurement of form deviations on flanks of gear shafts, preferably on flanks of worm shafts or gear wheels, wherein the gear shaft (12) is mounted by a rotating device (50) for rotation of the gear shaft (12),
wherein by means of an optical sensor (16) light is emitted onto the surface of the flank (52, 54) to be measured and the reflected light is detected and its scattered light distribution is evaluated for measuring the form deviations,
and wherein a drive device (14) moves the optical sensor (16) parallel to the longitudinal axis (32) of the gear shaft (12) in synchronization with the rotation of the gear shaft (12) so that the optical sensor (16) continuously scans the flank (52, 54) of the gear shaft (12) along a predetermined section,
wherein the optical sensor (16) comprises a transmitter module (18) including a radiation source (20) for emitting radiation along the longitudinal axis (22) of the sensor (16) and a detector line (24) with a plurality of detectors,
as well as a mirror module (26) which by means of a mirror directs the emitted radiation transversely to the longitudinal axis (22) of the sensor (16) onto the flank (52, 54) and deflects the reflected light toward the detector line (24),
**characterized in that** the transmitter module (18) is rotatably mounted independent of the mirror module and is rotatable by means of a first rotation device (28),
and that the mirror module (26) is mounted in a second rotation device (30) in the drive device (14) and is rotatable relative to the transmitter module (18).

10. The method according to claim 9, **characterized in that** the first rotation device (28) is rotated in an angle range from 0° to 90°.

11. The method according to claim 9 or claim 10, **characterized in that** the second rotation device (30) is rotated by 180°.

12. The method according to one of the preceding claims 9 to 11, **characterized in that** the mirror module (26) is mounted exchangeably, that several mirror modules with different geometries are kept ready, and that dependent on the geometry of the flanks of the gear shaft a suitable mirror module is chosen and used.

13. The method according to one of the preceding claims, **characterized in that** a contacting measuring sensor (42) determines a center position of the measuring sensor (42) between two adjacent flanks of the gear shaft (12),
that a control (34) is provided which dependent on the determined center position moves the optical sensor (16) in a direction parallel to the longitudinal axis (32) of the gear shaft (12) by the drive device (14) into an initial position in which it is opposite to the gear shaft (12) with its mirror module (26) in a middle position between two adjacent flanks,
and that the drive device (14) moves the sensor (16) with the mirror module (26) in a direction perpendicular to the longitudinal axis (32) of the gear shaft (12) to scan a section of one of the flanks (52, 54).

## Revendications

1. Dispositif de mesure sans contact de différences de formes sur les flancs d'arbres de transmission, de préférence sur les flancs d'arbres de vis sans fin ou de roues dentées,
comprenant un dispositif rotatif (50) qui est conçu pour loger un arbre de transmission (12),
un capteur optique (16), qui est conçu pour émettre de la lumière sur la surface à mesurer du flanc (52, 54) et pour détecter la lumière réfléchie et pour évaluer la distribution de lumière diffuse de celle-ci afin de mesurer les différences de formes,
et comprenant un dispositif d'entraînement (14) logeant le capteur (16),
le dispositif d'entraînement (14) étant conçu pour déplacer le capteur optique (16) parallèlement à l'axe longitudinal (32) de l'arbre de transmission (12) en synchronisation avec la rotation de l'arbre de transmission (12), de sorte que le capteur optique (16) balaye en continu le flanc (52, 54) de l'arbre de transmission (12) le long d'une section prédéfinie,
et le capteur optique (16) comportant un module d'émission (18) qui contient une source de rayonnement (20) destinée à émettre un rayonnement le long de l'axe longitudinal (22) du capteur (16) et une rangée de détecteurs (24) pourvue d'une pluralité de détecteurs,
ainsi qu'un module de miroir (26), qui est conçu pour diriger, au moyen d'un miroir, le rayonnement émis transversalement à l'axe longitudinal (22) du capteur (16) sur le flanc (52, 54), et pour dévier la lumière réfléchie en direction de la rangée de détecteurs (24),
**caractérisé en ce que** le module d'émission (18) est monté de manière à pouvoir tourner indépendamment du module de miroir et peut être amené en rotation au moyen d'un premier dispositif de rotation (28),
et **en ce que** le module de miroir (26) est logé dans un deuxième dispositif rotatif (30) dans le dispositif d'entraînement (14) et peut être amené en rotation par rapport au module d'émission (18).

2. Dispositif selon la revendication 1, **caractérisé en ce que** le premier dispositif rotatif (28) peut tourner dans une plage angulaire de 0° à 90°.

3. Dispositif selon la revendication 1 ou selon la revendication 2, **caractérisé en ce que** le deuxième dispositif rotatif (30) peut tourner de 180°.

4. Dispositif selon l'une quelconque des revendications précédentes, **caractérisé en ce que** le module de miroir (26) est interchangeable, **en ce que** plusieurs modules de miroir à géométrie différente sont fournis, et **en ce qu'**un module de miroir adapté est sélectionné et utilisé en fonction de la géométrie des flancs de l'arbre de transmission.

5. Dispositif selon l'une quelconque des revendications précédentes, **caractérisé en ce que** le dispositif d'entraînement (14) loge le capteur de manière à ce qu'il puisse coulisser perpendiculairement à l'axe longitudinal (32) de l'arbre de transmission (12) .

6. Dispositif selon l'une quelconque des revendications précédentes, **caractérisé en ce qu'**un palpeur de mesure (42) fonctionnant sans contact détermine une position centrale du palpeur de mesure (42) entre deux flancs voisins de l'arbre de transmission (12),
**en ce qu'**un contrôleur (34) est prévue, qui, en fonction de la position centrale déterminée, fait coulisser le capteur optique (16), dans une direction parallèle à l'axe longitudinal (32) de l'arbre de transmission (12), au moyen du dispositif d'entraînement (14), dans une position de départ dans laquelle il fait face à son module de miroir (26) dans une position centrale entre deux flancs voisins de l'arbre de transmission (12),
et **en ce que** le dispositif d'entraînement (14) fait coulisser le capteur (16) avec le module de miroir (26) dans une direction perpendiculaire à l'axe longitudinal (32) de l'arbre de transmission (12), afin de balayer une partie d'un des flancs (52, 54).

7. Dispositif selon la revendication 6, **caractérisé en ce que** le palpeur de mesure (42) comporte une boule de mesure (48), de préférence en rubis, dont le diamètre est supérieur à l'écart moyen entre des flancs voisins,
et **en ce que** le point le plus profond de la boule de mesure (48) lors d'un déplacement de la boule de mesure (48) entre deux flancs, dans le cas d'une révolution complète de l'arbre de transmission (12), est déterminé comme position centrale du palpeur de mesure (42) dans une direction parallèle à l'axe longitudinal (32) de l'arbre de transmission (12).

8. Dispositif selon l'une quelconque des revendications précédentes, **caractérisé en ce qu'**une lentille cylindrique, qui collecte la lumière dispersée réfléchie dans une plage angulaire agrandie et l'amène aux détecteurs de la rangée de détecteurs (24), est agencée devant la rangée de détecteurs (24).

9. Procédé de mesure sans contact de différences de forme sur les flancs d'arbres de transmission, de préférence sur les flancs d'arbres de vis sans fin ou de roues dentées,
selon lequel l'arbre de transmission (12) est logé par un dispositif rotatif (50) destiné à faire tourner l'arbre de transmission (12),
selon lequel de la lumière est émise sur la surface à mesurer du flanc (52, 54) par un capteur optique (16) et la lumière réfléchie est détectée et sa distribution de lumière diffuse est évaluée pour mesurer les différences de formes,
et selon lequel un dispositif d'entraînement (14) déplace le capteur optique (16) parallèlement à l'axe longitudinal (32) de l'arbre de transmission (12) en synchronisation avec la rotation de l'arbre de transmission (12), de sorte que le capteur optique (16) balaye en continu le flanc (52, 54) de l'arbre de transmission (12) le long d'une section prédéfinie,
le capteur optique (16) comprenant un module d'émission (18), qui contient une source de rayonnement (20) destinée à émettre un rayonnement le long de l'axe longitudinal (22) du capteur (16) et une rangée de détecteurs (24) comprenant une pluralité de détecteurs,
ainsi qu'un module de miroir (26), qui dirige au moyen d'un miroir le rayonnement émis transversalement à l'axe longitudinal (22) du capteur (16) sur le flanc (52, 54) et dévie la lumière réfléchie en direction de la rangée de détecteurs (24),
**caractérisé en ce que** le module d'émission (18) est monté de manière à pouvoir tourner indépendamment du module de miroir et peut être amené en rotation au moyen d'un premier dispositif rotatif (28),
et **en ce que** le module de miroir (26) est logé dans un deuxième dispositif rotatif (30) dans le dispositif d'entraînement (14) et peut être amené en rotation par rapport au module d'émission (18).

10. Procédé selon la revendication 9, **caractérisé en ce que** le premier dispositif rotatif (28) est amené en rotation dans une plage angulaire de 0° à 90°.

11. Procédé selon la revendication 9 ou la revendication 10, **caractérisé en ce que** le deuxième dispositif rotatif (30) est amené en rotation de 180°.

12. Procédé selon l'une quelconque des revendications précédentes 9 à 11, **caractérisé en ce que** le module de miroir (26) est monté interchangeable, **en ce que** plusieurs modules de miroir à géométrie différente sont fournis, et **en ce qu'**un module de miroir adapté est sélectionné et utilisé en fonction de la géométrie des flancs de l'arbre de transmission.

13. Procédé selon l'une quelconque des revendications précédentes, **caractérisé en ce qu'**un palpeur de mesure (42) fonctionnant sans contact détermine une position centrale du palpeur de mesure (42) entre deux flancs voisins de l'arbre de transmission (12),
**en ce qu'**une contrôleur (34) est prévue, qui, en fonction de la position centrale déterminée, fait coulisser le capteur optique (16) dans une direction parallèle à l'axe longitudinal (32) de l'arbre de transmission (12), au moyen du dispositif d'entraînement (14), dans une position de départ dans laquelle il fait face à son module de miroir (26) dans une position centrale entre deux flancs voisins de l'arbre de transmission (12),
et **en ce que** le dispositif d'entraînement (14) fait coulisser le capteur (16) avec le module de miroir (26) dans une direction perpendiculaire à l'axe longitudinal (32) de l'arbre de transmission (12), afin de balayer une section d'un des flancs (52, 54).
